Europäisches Patentamt

European Patent Office

Office européen des brevets

(19)

(11) Veröffentlichungsnummer: **0 158 961**
**B1**

(12) # EUROPÄISCHE PATENTSCHRIFT

(45) Veröffentlichungstag der Patentschrift: **05.09.90**

(21) Anmeldenummer: **85104284.6**

(22) Anmeldetag: **09.04.85**

(51) Int. Cl.⁵: **G 11 B 5/704,** G 11 B 5/64,
G 11 B 5/848

(54) **Trägerfolie für magnetische Informationsträger und deren Herstellung.**

(30) Priorität: **16.04.84 DE 3414310**

(43) Veröffentlichungstag der Anmeldung:
**23.10.85 Patentblatt 85/43**

(45) Bekanntmachung des Hinweises auf die
Patenterteilung:
**05.09.90 Patentblatt 90/36**

(84) Benannte Vertragsstaaten:
**BE DE FR GB IT LU NL**

(56) Entgegenhaltungen:
**FR-A-2 098 217**
**GB-A-2 042 929**

(73) Patentinhaber: **HOECHST**
**AKTIENGESELLSCHAFT**
**Postfach 80 03 20**
**D-6230 Frankfurt am Main 80 (DE)**

(72) Erfinder: **Hensel, Hartmut, Dr.**
**Am Rotenberg 2**
**D-6229 Schlangenbad 3 (DE)**
Erfinder: **Dallmann, Hermann, Dr.**
**Erbsenacker 29**
**D-6200 Wiesbaden (DE)**

**Beschreibung**

Die Erfindung betrifft eine mehrschichtige, über Coextrusion hergestellte, biaxial orientierte Trägerfolie für magnetische Informationsträger mit einer Basisschicht (A), umfassend eine thermoplastische Polymermatrix aus im wesentlichen linearem aromatischem Polyester, der zur Verbesserung seiner die Gleiteigenschaften der Folie bestimmenden Oberflächenrauhigkeit in fein verteilter Form feste Teilchen enthält.

Biaxial orientierte Folien aus Polyestern, insbesondere aus Polyethylenterephthalat, finden wegen ihrer überlegenen Eigenschaften, wie ihrer Zugfestigkeit, ihrer Reißfestigkeit, ihres Elastizitätsmoduls, ihrer Transparenz, ihrer chemischen Beständigkeit, ihrer thermischen Beständigkeit und dergleichen, Anwendung in großem Umfang auf vielen technischen Gebieten, beispielsweise auch als Träger für magnetische Aufzeichnungsmedien.

Die Polyesterfolien müssen jedoch eine spezifische Kombination von Eigenschaften aufweisen. So müssen Polyesterfolien, die zu Magnetbändern verarbeitet werden, die für die Audio-, Video- oder Computer-Technik eingesetzt werden, einen niedrigen Reibungskoeffizienten und eine hohe Abriebbeständigkeit aufweisen und gegen eine Verschlechterung ihrer elektromagnetischen Übertragungseigenschaften unempfindlich sein.

Zur Verbesserung der Eigenschaften von Polyesterfolien ist es bereits bekannt, feine Teilchen eines inerten Materials in die Folien einzubringen, beispielsweise unter Anwendung einer der nachstehend angegebenen Methoden:

1) Im allgemeinen wird der Rückstand von metallischen Verbindungen, die als Umesterungskatalysator verwendet werden, durch besondere Maßnahmen in Form von feinverteilten Teilchen in dem System ausgefällt (als "Ausfällungsmethode" bezeichnet); und/oder

2) man führt von außen Mikroteilchen einer anorganischen oder organischen Verbindung mit unterschiedlicher Teilchengröße zu (als "Zugabemethode" bezeichnet).

Einschichtige Folien, die organische Teilchen in feiner Verteilung enthalten, werden beispielsweise in der DE—OS 30 19 073 beschrieben, Folien die zur Verbesserung ihrer Gleiteigenschaften anorganische Teilchen enthalten, werden beschrieben in der DE—AS 21 33 895 und der DE—PS 26 47 713. Diese Folien sind einschichtige Folien und weisen daher auf beiden Oberflächen eine von der jeweils zugesetzten Teilchenmenge bzw. vom Teilchendurchmesser abhängige Oberflächenrauhigkeit auf.

Um die Oberflächenrauhigkeit auf der Oberfläche der Folie, die für die Aufnahme der Magnetschicht vorgesehen ist, zu erniedrigen, sind auch mehrschichtige Folien hergestellt worden, die aus einer ersten Schicht aus thermoplastischen Polymeren ohne Teilchenzusatz, welche eine vergleichsweise glatte Oberfläche aufweist, und einer zweiten dünneren, in der üblichen Weise mit Teilchen versehenen Schicht zusammengesetzt sind.

Es wurde festgestellt, daß der größte Nachteil der in herkömmliche Polyesterfolien eingebrachten Teilchen mit dem Zweck, das Gleitvermögen der Folie zu verbessern, in ihrer mangelnden Affinität zu dem Polymermaterial und in ihrer Neigung zur Agglomeratbildung zu sehen ist. Aufgrund dieser Tatsache führt die Reibung zwischen solchen herkömmlichen Folien untereinander oder zwischen einer solchen Folie und einem weiteren Material dazu, daß die Teilchen aus der Folie oder den Folien entfernt werden, was beispielsweise zur Bildung von weißem Staub oder Abscheidungen auf den Folien führt, die für Magnetbänder verwendet werden. Diese Abscheidungen sind äußerst unerwünscht, da sie sich in den Geräten zur Abspielung der Magnetbänder absetzen und dort zu Schädigungen führen.

Wenn die Teilchen, die normalerweise gleichmäßig in den die einzelnen Schichten bildenden Polymeren verteilt sind, sehr nahe unter der Schichtoberfläche gelagert sind, kommt es durch Reibung beim Aufwickeln oder Umspulen der schon einseitig mit Magnetschicht versehenen Bänder oder aber auch der noch nicht beschichteten Folie leicht zum Ablösen der die Teilchen abdeckenden, extrem dünnen Polymerschichtblättchen und zur Herauslösung der eingelagerten Teilchen. Die extrem dünnen Polymerschichtblättchen haften allerdings durch elektrostatische Aufladung sehr fest entweder an der Folie oder an der aufgebrachten Magnetschicht, wodurch es zu äußerst unerwünschten Störeffekten kommt, zu Haftungsverlusten, wenn die Magnetschicht vor Ablösung der Blättchen noch nicht aufgetragen war, oder zu Signalverlusten, wenn die Magnetschicht vor Ablösung der Blättchen bereits aufgetragen war. Ausserdem drücken sich die herausgelösten festen Teilchen in die Magnetschicht ein und führen zu Verformungen und letztendlich ebenfalls zu Signalverlusten oder -verzerrungen.

In der Praxis hat sich außerdem gezeigt, daß sich in der Oberfläche von Folien, auch solchen Folien, die nicht mit eingelagerten Teilchen versehen sind, bei mechanischer Beanspruchung Kratzer bilden und daß im Bereich dieser Kratzer kleine Polymerpartikel aus der Folie herausgelöst werden, durch welche ebenfalls die im Vorstehenden bereits erwähnten Nachteile entstehen.

Durch diese unter dem Begriff "Abriebverhalten" zusammengefaßten Störeffekte passiert es im ungünstigsten Fall, daß die aus den angegebenen Trägermaterialien hergestellten Magnetbänder für einen sachgemäßen Einsatz als Video-, Audio- oder Computerbänder unbrauchbar werden. Für "flexible discs" gelten die Betrachtungen in ähnlicher Weise.

Der vorliegenden Erfindung lag daher die Aufgabe zugrunde, ausgehend vom dargestellten Stand der Technik eine Trägerfolie für magnetische Informationsträger zu schaffen, welche

—auf der für die Aufnahme der Magnetschicht vorgesehenen Oberfläche eine geringe Oberflächenrauhigkeit aufweist,

—auf der der Magnetschicht gegenüberliegenden Oberfläche eine die Gleiteigenschaften bestimmende relativ große Oberflächenrauhigkeit aufweist,

—genügend große Festigkeit in Längs- und Querrichtung aufweist, um die Herstellung extrem dünner Bänder mit extrem hoher Signaldichte zu ermöglichen,

—ein ausgezeichnetes Abriebverhalten aufweist, so daß auch bei starker Reibungsbeanspruchung keine Ablagerungen auf der Folien- oder Magnetschichtoberfläche beobachtet werden.

Gelöst wird diese Aufgabe durch eine der eingangs genannten Gattung angehörende Trägerfolie, deren kennzeichnende Merkmale darin zu sehen sind, daß die Basisschicht A die festen Teilchen in einer Menge von 0,001 Gew.-% bis 10 Gew.-%, bezogen auf das Gewicht des die Basisschicht A bildenden Polymeren, enthält, wobei die mittlere Teilchengröße der festen Teilchen im Bereich von 0,001 bis 20 µm liegt, daß die auf mindestens einer der beiden Oberflächen der Basisschicht A aufgebrachte Deckschicht B eine thermoplastische Polymermatrix aus im wesentlichen linearem, aromatischem Copolyester umfasst, welcher in fein verteilter Form feste Teilchen in einer Menge von 0 bis 10 Gew.-%, bezogen auf das Gewicht des die Deckschicht B bildenden Polymeren, eingelagert sind, wobei die festen Teilchen einen mittleren Teilchendurchmesser von kleiner als 0,3 µm aufweisen, und daß die Schichtdicke der Deckschicht B höchstens 40% der Schichtdicke der Basisschicht A beträgt.

Die Basisschicht A kann dabei aus Polyester-Homopolymeren bestehen, die durch Polykondensation von beispielsweise Ethylenglykol mit Terephthalsäure oder Naphthalinsäure erhalten werden. Die Schicht A kann auch aus Gemischen verschiedener Polyester sowie Abmischungen oder Blends von Polyester-Homopolymeren mit anderen Polymeren wie z.B. Polyolefin-Homo- oder -Copolymeren, Polyamiden, Polycarbonaten, Ionomeren u.a. zusammengesetzt sein. Bevorzugt besteht die Schicht A aus Polyethylenterephthalat. Sie enthält in fein verteilter Form feste Teilchen in einer Menge von bevorzugt 0,001 bis 5 Gew.-%, besonders bevorzugt von 0,001 bis 1 Gew.-%, jeweils bezogen auf das Gewicht des die Basisschicht A bildenden Polyesters. Die Teilchen können aus einem anorganischen oder aus einem organischen Material sein, es können aber auch Präzipitate von Katalysatorresten oder Mischungen aller drei Teilchenarten sein. Beispiele hierfür sind ein oder mehrere der folgenden Materialien:

Siliciumdioxid wie z.B. hydrophobe pyrogene Kieselsäure, natürliches Siliciumdioxid und Diatomeenerdensiliciumdioxid; synthetische und natürliche Silikate wie Kaolin; natürliches und pyrogenes Aluminiumoxid und Aluminiumhydroxid; Calciumcarbonat; Bariumsulfat; Titandioxid; Ruß; Metallteilchen wie z.B. solche aus Aluminium, Kupfer, Eisen usw.; magnetische Teilchen wie z.B. Bariumferrit; Teilchen aus polymeren Materialien wie z.B. Plastomere, Elastomere, Duromere.

Die Pigmente können zusätzlich zwecks besserer Haftung zur Matrix mit einem Haftvermittler beschichtet sein.

Die feinverteilten Teilchen haben eine mittlere Teilchengröße von bevorzugt 0,01 bis 15 µm, besonders bevorzugt von 0,1 bis 10 µm.

Auf wenigstens eine der Oberflächen der Basisschicht A ist eine Deckschicht B aufgebracht. Die Deckschicht B hat dabei eine Schichtdicke, die kleiner ist als die Schichtdicke der Basisschicht A, bevorzugt weist die Deckschicht B eine Dicke von maximal 30%, besonders bevorzugt von maximal 15% der Schichtdicke der Basisschicht A auf. Die Deckschicht B besteht aus einem statistischen Copolyester aus Ethylenterephthalateinheiten und weiterer Esterkomponente. Die für die weiteren Esterkomponenten verwendete Diolkomponente dann z.B. Diethylenglykol, Propylenglykol, p-Xylylenglykol, 1,4-Cyclohexandimethanol sein; als Säurekomponente können z.B. Adipinsäure, Sebazinsäure, Phthalsäure, Isophthalsäure, 2,6-Naphthalindicarbonsäure, 5-Natriumsulfoisophthalsäure oder polyfunktionelle Säuren wie Trimelitsäure oder Pyromelitsäure eingesetzt werden. Besonders bevorzugt besteht die Deckschicht aus einem Copolyester aus Polyethylenterephthalat-Isophthalat mit einem Gehalt an Isophthalateinheiten von wenigstens 5 Gew.-%, bezogen auf das Gesamtgewicht des Copolyersters, bevorzugt von wenigstens 15 Gew.-%, besonders bevorzugt im Bereich von 15 bis 25 Gew.-%, welchem in sehr feiner Verteilung feste Teilchen in einer Menge von bevorzugt 0 bis 5 Gew.-%, besonders bevorzugt 0 bis 2 Gew.-%, ganz besonders bevorzugt 0 Gew.-%, jeweils bezogen auf das Gewicht des die Deckschicht B bildenden Copolyesters, eingelagert sind. Die festen Teilchen haben dabei einen Teilchendurchmesser von bevorzugt im Mittel kleiner als 0,2 µm, besonders bevorzugt kleiner als 0,1 µm.

Die festen Teilchen können aus den gleichen Materialien bestehen, wie sie bereits für die Basisschicht A beschrieben sind, es müssen aber nicht für Basisschicht und Deckschicht immer die gleichen Teilchen verwendet werden, sondern es können für die Deckschicht Teilchen aus anderen Materialien verwendet werden als diejenigen, welche der Basisschicht einverleibt sind.

Die Deckschicht B hat die Aufgabe, die die Oberflächenrauhigkeit der Basisschicht A beeinflussenden Teilchen, die in der Basisschicht A enthalten sind, gerade soweit abzudecken, daß zwei Bedingungen erfüllt sind:

1. Die nach dem Aufbringen der Schicht B verbleibende Oberflächenrauhigkeit, die durch die teilchenbedingte Oberflächenstrukturierung der Schicht A hervorgerufen wird, welche sich teilweise durch die Deckschicht B hindurchdrückt oder die jedenfalls eine gewisse Oberflächenstrukturierung auch der Deckschicht B bewirkt, muß so groß sein, daß Reibungseigenschaften der Folie daraus resultieren, die

EP 0 158 961 B1

sowohl das Aufwickeln der Folie als auch das Laufverhalten der aus der Folie hergestellten Magnetbänder positiv beeinflussen.

2. Die Teilchen müssen genügend weit von der freien Oberfläche der Deckschicht B entfernt sein, damit ein Herausreißen der Teilchen und somit ein Abrieb verhindert wird.

Der Copolyester der Deckschicht B bewirkt zusätzlich, daß sich bei mechanischer Beanspruchung der Folie beim bestimmungsgemäßen Abspielen oder Umspulen der Magnetbänder bei eventueller Bildung von Kratzern keine Polymerpartikelchen aus der Matrix der Deckschicht B ablösen.

In einer besonderen Ausführungsform der Erfindung besitzt die Folie einen dreischichtigen Aufbau, umfassend eine Basisschicht A, bei welcher auf beiden Oberflächen Deckschichten B, B' aufgebracht sind. Die Basisschicht hat dabei die Zusammensetzung, wie sie bereits in der vorstehenden Beschreibung erläutert wurde. Eine einseitig beschichtete Folie weist auf der der Deckschicht B gegenüberliegenden Seite eine ganz bestimmte Oberflächenrauhigkeit auf, die abhängig ist von der jeewils zugesetzten Teilchenmenge und dem mittleren Teilchendurchmesser der zugesetzten Teilchen. Es soll aber die Magnetschicht auf eine Folienoberfläche aufgebracht werden, die von Unebenheiten im wesentlichen frei ist, damit die Magnetschicht nicht durch die Rauhigkeit des Untergrunds beeinfluß wird und in möglichst gleichmäßiger Schichtdicke vorliegt. Dies dient vor allem dazu, daß nicht an Stellen geringerer Schichtdicke Signalverluste beim Abspielen der Bänder auftreten.

Um der Magnetschicht eine glatte Unterlage zu bieten, werden gemäß der vorliegenden Erfindung beide Oberflächen der Basisschicht A mit Deckschichten B und B' der vorstehend beschriebenen Zusammensetzung überzogen. Die Schichtdicke der Deckschicht B', die auf der Seite der Basisschicht aufgetragen wird, die für das Aufbringen der Magnetschicht vorgesehen ist, wird so gewählt, daß die Unebenheiten, die durch die in der Basisschicht A enthaltenen Teilchen auf der Oberfläche der Basisschicht A vorhanden sind, auf der Oberfläche der Deckschicht B' deutlich reduziert sind. Bevorzugt beträgt die Schichtdicke der Deckschicht B' auf der für die Beschichtung mit der Magnetschicht vorgesehenen Seite der Trägerfolie 0,1 bis 3 µm, besonders bevorzugt 0,1 bis 2 µm.

Die Deckschicht B' besteht dabei in der besonders bevorzugten Ausführungsform der Erfindung aus dem Copolyester, wie er bereits für die der für die Aufbringung der Magnetschicht gegenüberliegenden Seite der Trägerfolie vorgesehene Deckschicht B eingesetzt wird, sie kann aber auch aus anderem Copolyester gebildet sein, welchem keine festen Teilchen einverleibt sind. Es können aber, um noch eine geringe, die Lauf- und Wickeleigenschaften der Folie beeinflussende Oberflächenrauhigkeit zu erzeugen, feste Teilchen mit den angegebenen Teilchengrößen von kleiner 0,3 µm in der Deckschicht B' vorhanden sein.

Die Deckschicht B, die auf der Seite der Basisschicht A aufgetragen wird, die der Oberfläche, auf der das Aufbringen der Magnetschicht vorgesehen ist, gegenüberliegt, soll dabei mit einer solchen Schichtdicke aufgebracht sein, daß die Oberflächenstruktur der darunterliegenden Basisschicht noch erkennbar ist, bevorzugt beträgt die Schichtdicke 0,1 bis 1 µm, besonders bevorzugt 0,1 bis 0,5 µm. Die Deckschicht B kann dabei aus dem Copolyester der angegebenen Zusammensetzungen, welcher keine festen Teilchen enthält, bestehen, es können aber, um in Einzelfällen eine Oberflächenteilstrukturierung zu erreichen, auch noch feste Teilchen mit den angegebenen Teilchengrößen von kleiner 0,3 µm in der Deckschicht B vorhanden sein.

Wenigstens eine der Schichten kann zusätzlich Additive enthalten wie Schlupf- und Gleitmittel, Antistatika, Antioxydantien und dergleichen, die sich auf die Eigenschaften der Folie positiv auswirken.

Die Herstellung der im Vorstehenden beschriebenen Trägerfolie erfolgt nach dem Extrusionsverfahren, bevorzugt nach dem Coextrusionsverfahren. Bei diesem Verfahren werden die die einzelnen Schichten der Trägerfolie bildenden Polymeren in getrennten Extrudern plastifiziert, über getrennte Schmelzeleitungen zusammengeführt und dann mittels einer Düse auf eine Kühlwalze extrudiert und die unverstreckte Folie abgekühlt. Nach dem Abkühlen wird die Folie in bekannter Weise durch mehrfaches Verstrecken in Längs- und Querrichtung orientiert, thermofixiert, geschnitten und aufgewickelt. Das kennzeichnende Merkmal diese Verfahrens ist darin zu sehen, daß die Basisschicht A die festen Teilchen in einer Menge von 0,001 Gew.-% bis 10 Gew.-%, bezogen auf das Gewicht des die Basisschicht A bildenden Polymeren, enthält, wobei die mittlere Teilchengröße der festen Teilchen im Bereich von 0,001 bis 20 µm liegt, daß die auf mindestens einer der beiden Oberflächen der Basisschicht A aufgebrachte Deckschicht B eine thermoplastische Polymermatrix aus im wesentlichen linearem, aromatischem Copolyester umfasst, welcher in fein verteilter Form feste Teilchen in einer Menge von 0 bis 10 Gew.-%, bezogen auf das Gewicht des die Deckschicht B bildenden Polymeren, eingelagert sind, wobei die festen Teilchen einen mittleren Teilchendurchmesser von kleiner als 0,3 µm aufweisen, und daß die Schichtdicke der Deckschicht B höchstens 40% der Schichtdicke der Basisschicht A beträgt. Die Variation der Schichtdicke(n) der Deckschicht(en) B, B' geschieht dabei bevorzugt durch Regulierung des Zufuhr der Schmelzen der die Deckschicht(en) B, B' bildenden Polymeren an den Schmelzeleitungen zu der Coextrusionsdüse, es kann aber auch durch Regulierung der Drehzahl der für die Plastifizierung und Förderung der die Deckschicht(en) B, B' bildenden Polymeren vorgesehenen Aggregate eine Variation der Schichtdicke(n) vorgenommen werden.

In einer bevorzugten Variante des Herstellungsverfahrens wird das vorstehend genannte Verfahrensmerkmal mit einer bestimmten Temperaturführung während der Thermofixierstufe kombiniert. Die Thermofixierung wird im wesentlichen deswegen durchgeführt, um der Folie eine gute

4

Dimensionsstabilität zu verleihen. Um nun zusätzlich die Eigenschaften der Deckschicht(en) hinsichtlich verbesserter Abriebfestigkeit vorteilhaft zu beeinflussen, hat es sich in der Praxis als besonders günstig erwiesen, die Temperatur bei der Thermofixierung oberhalb 200°C einzustellen, bevorzugt oberhalb 210°C. Besonders bevorzugt soll die Folie nach der Behandlung bei der vorstehend angegebenen Temperatur möglichst schnell auf eine Temperatur von maximal 70°C abgekühlt werden. Dieses Verfahren wird auch als Abschrecken bezeichnet.

Durch das im Vorstehenden beschriebene Verfahren hat der Fachmann ein einfaches Mittel in der Hand, Folien mit verschiedensten Oberflächenbeschaffenheiten herzustellen. Es können Folien mit auf beiden Seitem im wesentlichen glatter Oberfläche erzeugt werden, indem die Schichtdicken der beidseitig aufgebrachten Deckschichten B, B' so groß gewählt werden, daß alle auf den Oberflächen der Basisschicht A vorhandenen Strukturierungen überdeckt werden, es können Folien mit einer im wesentlichen glatten Oberfläche und einer im Vergleich zu dieser relativ rauhen Oberfläche erzeugt werden, indem eine der Schichtdicken der Deckschichten so groß gewählt wird, daß alle auf der Basisschicht A vorhanden Strukturierungen überdeckt werden, und indem die Schichtdicke der anderen Deckschicht so klein gewählt wird, daß Strukturierungen der Basisschicht A auf der Oberfläche der Deckschicht noch deutlich erkennbar sind.

Die im Nachfolgenden beschriebenen Ausführungsbeispiele sollen dazu dienen, die Erfindung noch deutlicher, insbesondere im Vergleich mit dem Stand der Technik, zu erläutern, ohne jedoch einschränkend zu sein.

Beispiel 1 (Vergleichsbeispiel)

Ein Polyester mit einem Zusatz von 0,3 Gew.-%, bezogen auf das Gewicht des Polyesters, von gleichmäßig verteilten anorganischen Partikeln aus $BaSO_4$ mit einem mittleren Teilchendurchmesser von 1,0 µm wird als Monofilm mit einer Schichtdicke von 180 µm extrudiert und auf einer Kühlwalze abgekühlt.

Der erhaltene Vorfilm wird auf 82°C mittels Walzen aufgeheizt und in einem Spalt zwischen zwei Walzen um den Faktor 3,5 längsgestreckt und sofort abgekühlt, anschließend wieder auf 110°C aufgeheizt und um den Faktor 3,4 quergestreckt.

Die so erhaltene biaxial gestreckte Folie wird für etwa 2 sec einer Temperatur von 230°C ausgesetzt und anschließend mit einer Geschwindigkeit von etwa 100°C/sec auf eine Temperatur unterhalb 50°C abgekühlt. Sie hat in Längs- und Querrichtung nahezu gleiche mechanische Eigenschaften und ist etwa 15 µm dick.

Beispiel 2 bis 8 (erfindungsgemäß)

Ein Polyester gemäß Beispiel 1 und ein Copolyester, bestehend aus Polyethylenterephthalat/ isophthalat mit 18% Isophthalat, ohne Teilchenzusätze werden separat mittels Extrudern aufgeschmolzen, mit Hilfe zweier Zahnradpumpen (Dosierpumpen) einer Dreischichtdüse zugeführt und derart extrudiert, daß der Copolyester den Polyester nach Beispiel 1 sowohl auf der Ober- als auch auf der Unterseite mit gleicher Schichtdicke abdeckt.

Der so erhaltene Verbundstrom wird in gleicher Weise wie in Beispiel 1, jetzt allerdings als dreischichtiger Mehrschichtfilm, zu 15 µm dicken Folien verarbeitet.

Während der Herstellung der Mehrschichtfolie werden mittels Drehzahlregulierung der Zahnradpumpen die Schichtdicken der Deckschichten beidseitig in folgender Weise eingestellt:

| Beispiel | 2 | 3 | 4 | 5 | 6 | 7 | 8 |
|---|---|---|---|---|---|---|---|
| Schichtdicke (µm) | 0,2 | 0,3 | 0,5 | 1,0 | 1,5 | 2,0 | 2,5 |

Die Gesamtdicke der Filme beträgt jeweils 15 µm.

Die erhaltenen Folien können als symmetrische (BAB)-Folien beziechnet werden.
Die Folien der Beispiele 1 und 2 bis 8 werden folgenden Tests unterworfen:
a) Gleitreibung gemäß DIN 53375,
b) Rauhigkeitsmessung der Oberflächen gemäß DIN 4768 (cut off: 0,25 mm),
c) Abriebtest mit Gerät entsprechend eigener Entwicklung.

Ergebnisse:

a) Die Ergebnisse der Messungen der Gleitreibung sind in der folgenden Tabelle I zusammengestellt.

TABELLE I

| Beispiel | Gleitreibung |
|----------|--------------|
| 1 | 0,34 |
| 2 | 0,40 |
| 3 | 0,50 |
| 4 | 1,5 |
| 5 | >1,5 (blocken) |
| 6 | >1,5 (blocken) |
| 7 | >1,5 (blocken) |
| 8 | >1,5 (blocken) |

Die Folie nach Beispiel 1 weist einen Gleitreibungskoeffizienten von 0,34 auf. Die Oberfläche der Basisschicht kann mit einer Deckschicht einer Schichtdicke von etwa 0,2 µm abgedeckt werden, ohne daß sich das Gleitreibungsverhalten der entstehenden Folie im Vergleich zu einer nicht beschichteten Folie wesentlich verändert. Selbst bei einer Schichtdicke der Deckschicht von 0,3 µm (Beispiel 3) ist noch keine gravierend nachteilige Beeinflussung zu beobachten.

Erst bei einer Schichtdicke der Deckschicht von 1,0 µm und mehr (Beispiele 5 bis 8) verändert sich die Oberfläche der Folie so, daß sie in ihrem Gleitverhalten einer Folie ohne jeglichen Teilchenzusatz entspricht, bei der also "Blocken" zu beobachten ist.

b) Die Ergebnisse der Messungen der Oberflächenrauhigkeit sind in der nachfolgenden Tabelle II zusammengestellt.

TABELLE II

| Beispiel | $R_t$ (µm) | $R_a$ (µm) |
|----------|-----------|-----------|
| 1 | 0,8 | 0,06 |
| 2 | 0,73 | 0,052 |
| 3 | 0,65 | 0,045 |
| 4 | 0,52 | 0,033 |
| 5 | 0,23 | 0,016 |
| 6 | 0,21 | 0,015 |
| 7 | 0,21 | 0,015 |
| 8 | 0,21 | 0,015 |

Wie Tabelle II zeigt kann durch Variation der Schichtdicke der Deckschichten ohne jeglichen Teilchenzusatz die Oberflächenrauhigkeit der Folie deutlich beeinflußt werden. Beträgt die Schichtdicke 1,5 µm und mehr, so ist eine Veränderung nicht mehr möglich.

In Zusammenschau mit dem bereits diskutierten Gleitreibungsverhalten kann im Bereich einer Schichtdicke der Deckschichten von 0,0 bis 0,5 µm die Oberflächenrauhigkeit ($R_t$/$R_a$), die die Güte des magnetischen Signals beeinflußt, ohne nachteiligen Gleitreibungsverlust in den in der Tabelle II angegebenen Werten variabel eingestellt werden.

c) Das Abriebverhalten der nach den Beispielen hergestellten Folien wurde an einem Meßgerät getestet, bei dem ein 12,5 mm breites Folienband mit einer konstanten Bahnspannung (1 N) über eine Reibwalze (feststehende Umlenkrolle aus einer Magnetbandkassette) gezogen, anschließend über zwei als Meßrollen dienende Gummirollen geführt und dann aufgerollt wurde. Die Beladung der Gummirollen wurde nach einer Meßskala von 1, entspricht sehr wenig Abrieb, bis 6, entspricht sehr viel Abrieb, beurteilt. Die Meßergebnisse sind in der nachfolgenden Tabelle III zusammengestellt.

TABELLE III

| Beispiel | Abrieb |
|----------|--------|
| 1 | 6 |
| 2 | 2 |
| 3 | 1 |
| 4 | 1 |
| 5 | 1 |
| 6 | —(4) |
| 7 | — |
| 8 | — |

Die dargestellten Meßwerte stellen die Mittelwerte aus 10 Einzelmessungen dar.

Mit zunehmender Schichtdicke der Deckschichten ist eine Verbesserung des Abriebverhaltens feststellbar. Bei den Beispielen 6 bis 8 war allerdings keine eindeutige Aussage mehr möglich, da die Folie an der Reibwalze blockierte und die konstante Bahnspannung nicht mehr eingehalten werden konnte.

**Patentansprüche**

1. Mehrschichtige, über Coextrusion hergestellte, biaxial orientierte Trägerfolie für magnetische Informationsträger mit einer Basisschicht (A), umfassend eine thermoplastische Polymermatrix aus im wesentlichen linearem aromatischem Polyester, der zur Verbesserung seiner die Gleiteigenschaften der Folie bestimmenden Oberflächenrauhigkeit in fein verteilter Form feste Teilchen enthält, dadurch gekennzeichnet, daß die Basisschicht (A) die festen Teilchen in einer Menge von 0,001 Gew.-% bis 10 Gew.-%, bezogen auf das Gewicht des die Basisschicht (A) bildenden Polymeren, enthält, wobei die mittlere Teilchengröße der festen Teilchen im Bereich von 0,001 bis 20 μm liegt, daß die auf mindestens einer der beiden Oberflächen der Basisschicht (A) aufgebrachte Deckschicht (B) eine thermoplastische Polymermatrix aus im wesentlichen linearem, aromatischem Copolyester umfasst, welcher in fein verteilter Form feste Teilchen in einer Menge von 0 bis 10 Gew.-%, bezogen auf das Gewicht des die Deckschicht (B) bildenden Polymeren, eingelagert sind, wobei die festen Teilchen einen mittleren Teilchendurchmesser von kleiner als 0,3 μm aufweisen, und daß die Schichtdicke der Deckschicht (B) höchstens 40% der Schichtdicke der Basisschicht (A) beträgt.

2. Trägerfolie nach Anspruch 1, dadurch gekennzeichnet, daß die Schichtdicke der Deckschicht (B) maximal 30% der Schichtdicke der Basisschicht (A) beträgt, bevorzugt maximal 15%.

3. Trägerfolie nach Anspruch 1 oder 2, dadurch gekennzeichnet, daß die Basisschicht (A) aus Polyethylenterephthalat besteht, welches in fein verteilter Form feste Teilchen in einer Menge von 0,001 bis 5 Gew.-%, bevorzugt von 0,001 bis 1 Gew.-%, enthält, bezogen auf das Gewicht des die Basisschicht (A) bildenden Polyethylenterephthalats, wobei die Teilchen anorganische und/oder organische Additive und/oder Katalysatorpräzipitate sein können.

4. Trägerfolie nach einem der Ansprüche 1 bis 3, dadurch gekennzeichnet, daß die in der Basisschicht (A) enthaltenen Teilchen eine mittlere Teilchengröße von 0,01 bis 15 μm, bevorzugt von 0,1 bis 10 μm, aufweisen.

5. Trägerfolie nach einem der Ansprüche 1 bis 4, dadurch gekennzeichnet, daß die Deckschicht (B) aus einem Copolyester aus Polyethylenterephthalat-Isophthalat mit einem Gehalt an Isophthalateinheiten von wenigstens 5 Gew.-%, bezogen auf das Gesamt gewicht des Copolyesters, bevorzugt von wenigstens 15 Gew.-%, besonders bevorzugt im Bereich von 15 bis 25 Gew.-%, besteht, welches in fein verteilter Form feste Teilchen in einer Menge von 0 bis 5 Gew.-%, bevorzugt von 0 bis 2 Gew.-%, besonders bevorzugt von 0 Gew.-%, jeweils bezogen auf das Gewicht des die Deckschicht B bildenden Copolyesters, enthält.

6. Trägerfolie nach einem der Ansprüche 1 bis 5, dadurch gekennzeichnet, daß die in der Deckschicht (B) enthaltenen Teilchen eine mittlere Teilchengröße von kleiner als 0,2 μm, bevorzugt von kleiner als 0,1 μm, aufweisen, wobei die Teilchen anorganische und/oder organische Additive und/oder Katalysatorpräzipitate sein können.

7. Trägerfolie nach einem der Ansprüche 1 bis 6, dadurch gekennzeichnet, daß auf beiden Seiten der Basisschicht (A) Deckschichten (B, B') aufgebracht sind.

8. Trägerfolie nach einem der Ansprüche 1 bis 7, dadurch gekennzeichnet, daß die auf der Seite der Trägerfolie, die für die Auftragung der Magnetschicht vorgesehen ist, vorliegende Deckschicht (B') eine Schichtdicke von 0,5 bis 3 μm, bevorzugt von 0,5 bis 2 μm, aufweist.

9. Trägerfolie nach einem der Ansprüche 1 bis 8, dadurch gekennzeichnet, daß die auf der Seite der Trägerfolie, die der für die Auftragung der Magnetschicht vorgesehenen Seite gegenüberliegt, vorliegende Deckschicht (B) eine Schichtdicke von 0,1 bis 1 μm, bevorzugt von 0,1 bis 0,5 μm, aufweist.

10. Verfahren zur Herstellung einer Trägerfolie nach einem der Ansprüche 1 bis 9 durch Coextrusion, wobei die die einzelnen Schichten der Trägerfolie bildenden Polymeren in getrennten Extrudern plastifiziert werden, über getrennte Schmelzeleitungen in eine Extrusionsdüse, in der die mehrschichtige Vorfolie gebildet wird, geleitet werden, dann die mehrschichtige Vorfolie auf einer Kühlwalze extrudiert und in unverstrecktem Zustand abgekühlt wird, anschließend die unverstreckte Folie durch mehrfaches Verstrecken in Längs- und Querrichtung orientiert, thermofixiert, geschnitten und aufgewickelt wird, dadurch gekennzeichnet, daß die Basisschicht (A) die festen Teilchen in einer Menge von 0,001 Gew.-% bis 10 Gew.-%, bezogen auf das Gewicht des die Basisschicht (A) bildenden Polymeren, enthält, wobei die mittlere Teilchengröße der festen Teilchen im Bereich von 0,001 bis 20 μm liegt, daß die auf mindestens einer der beiden Oberflächen der Basisschicht (A) aufgebrachte Deckschicht (B) eine thermoplastische Polymermatrix aus im wesentlichen linearem, aromatischem Copolyester umfasst, welcher in fein verteilter Form feste Teilchen in einer Menge von 0 bis 10 Gew.-%, bezogen auf das Gewicht des die Deckschicht (B) bildenden Polymeren, eingelagert sind, wobei die festen Teilchen einen mittleren Teilchendurchmesser von kleiner als 0,3 μm aufweisen, und daß die Schichtdicke der Deckschicht (B) höchstens 40% der Schichtdicke der Basisschicht (A) beträgt.

11. Verfahren nach Anspruch 10, dadurch gekennzeichnet, daß zur Variation der Schichtdick(en) der Deckschicht(en) (B, B') die Zufuhr der die Deckschicht(en) (B, B') bildenden Polymeren zu der Coextrusionsdüse reguliert wird.

12. Verfahren nach einem der Ansprüche 10 oder 11, dadurch gekennzeichnet, daß die Regulierung der Schmelzeströme der die Deckschicht(en) (B, B') bildenden Polymeren durch die Einstellung der Drehzahl der zur Plastifizierung und Förderung der Polymeren vorgesehenen Aggregate vorgenommen wird.

13. Verfahren nach einem der Ansprüche 10 bis 12, dadurch gekennzeichnet, daß die Thermofixierung bei einer Temperatur oberhalb 200°C, bevorzugt oberhalb 210°C, durchgeführt wird und daß die Folie nach der Thermofixierung auf eine Temperatur von höchstens 50°C abgeschreckt wird.

**Revendications**

1. Pellicule de support multicouche, produite par coextrusion, orientée biaxialement, pour supports magnétiques d'informations, comportant une couche de base (A), comprenant une matrice polymère thermoplastique à base d'un polyester aromatique essentiellement linéaire qui contient des particules solides sous forme finement divisée, pour l'amélioration de sa rugosité superficielle déterminant les propriétés de glissement de la pellicule, caractérisée en ce que la couche de base (A) contient les particules solides en une quantité de 0,001% en poids à 10% en poids, par rapport au poids du polymère formant la couche de base (A), la taille moyenne des particules solides étant dans la plage de 0,001 à 20 µm, en ce que la couche de recouvrement (B), appliquée sur au moins l'une des deux faces de la couche de base (A), comprend une matrice de polymère thermoplastique constituée d'un copolyester aromatique essentiellement linéaire, dans laquelle sont incorporées des particules solides sous forme finement divisée, en une quantité de 0 à 10% en poids par rapport au poids du polymère formant la couche de recouvrement (B), les particules solides présentant un diamètre moyen de particules inférieur à 0,3 µm, et en ce que l'épaisseur de la couche de recouvrement (B) représente au maximum 40% de l'épaisseur de la couche de base (A).

2. Pellicule de support selon la revendication 1, caractérisée en ce que l'épaisseur de la couche de recouvrement (B) représente 30% au maximum, de préférence 15% au maximum de l'épaisseur de la couche de base (A).

3. Pellicule de support selon la revendication 1 ou 2, caractérisée en ce que la couche de base (A) est constituée de poly(téréphtalate d'éthylène) contenant sous forme finement divisée des particules solides en une quantité de 0,001 à 5% en poids, de préférence de 0,001 à 1% en poids, par rapport au poids du poly(téréphtalate d'éthylène) constituant la couche de base (A), les particules pouvant être des additifs minéraux et/ou organiques et/ou des précipités de catalyseurs.

4. Pellicule de support selon l'une des revendications 1 à 3, caractérisée en ce que les particules contenues dans la couche de base (A) présentent une taille moyenne de particules de 0,01 à 15 µm, de préférence de 0,1 à 10 µm.

5. Pellicule de support selon l'une des revendications 1 à 4, caractérisée en ce que la couche de recouvrement (B) est constituée d'un copolyester consistant en poly(téréphtalate/isophtalate d'éthylène) ayant une teneur en motifs isophtalate d'au moins 5% en poids, de préférence d'au moins 15% en poids, en particulier dans la plage de 15 à 25% en poids, par rapport au poids total du copolyester, lequel contient, sous forme finement divisée, des particules solides en une quantité de 0 à 5% en poids, de préférence de 0 à 2% en poids, en particulier de 0% en poids, dans chaque cas par rapport au poids du copolyester constituant la couche de recouvrement (B).

6. Pellicule de support selon l'une des revendications 1 à 5, caractérisée en ce que les particules contenues dans la couche de recouvrement (B) présentent une taille moyenne de particules inférieure à 0,2 µm, de préférence inférieure à 0,1 µm, les particules pouvant être des additifs minéraux et/ou organiques et/ou des précipités de catalyseurs.

7. Pellicule de support selon l'une des revendications 1 à 6, caractérisée en ce que des couches de recouvrement (B, B') sont appliquées sur les deux côtés de la couche de base (A).

8. Pellicule de support selon l'une des revendications 1 à 7, caractérisée en ce que la couche de recouvrement (B') se trouvant sur le côté de la pellicule de support qui est prévu pour l'application de la couche magnétique, présente une épaisseur de couche de 0,5 à 3 µm; de préférence de 0,5 à 2 µm.

9. Pellicule de support selon l'une des revendications 1 à 8, caractérisée en ce que la couche de recouvrement (B) se trouvant sur le côté de la pellicule de support qui est opposé au côté prévu pour l'application de la couche magnétique, présente une épaisseur de couche de 0,1 à 1 µm, de préférence de 0,1 à 0,5 µm.

10. Procédé pour la fabrication d'une pellicule de support selon l'une des revendications 1 à 9, par co-extrusion, dans lequel les polymères constituant les couches individuelles de la pellicule de support sont plastifiés dans des extrudeuses séparées, sont amenés par des conduits de masse fondue séparés, dans une buse d'extrusion dans laquelle est formée la feuille primaire multicouche, ensuite la feuille primaire multicouche est extrudée sur un cylindre refroidisseur et refroidie à l'état non étiré, la feuille non étirée est ensuite orientée dans le sens longitudinal et dans le sens transversal par étirage multiple, thermofixée, découpée puis enroulée, caractérisé en ce que la couche de base (A) contient les particules solides en une quantité de 0,001% en poids à 10% en poids, par rapport au poids du polymère constituant la couche de base (A), la taille moyenne des particules solides étant dans la plage de 0,001 à 20 µm, en ce que la couche de recouvrement (B), appliquée sur au moins l'une des deux faces de la couche de base (A), comprend une matrice de polymère thermoplastique constituée d'un copolyester aromatique essentiellement linéaire, dans laquelle sont incorporées, sous forme finement divisée, des particules solides en une quantité de 0 à 10% en poids, par rapport au poids du polymère constituant la couche de recouvrement (B), les particules solides présentant un diamètre moyen de particule inférieur à 0,3 µm, et en ce que l'épaisseur de la couche de recouvrement (B) représente au maximum 40% de l'épaisseur de la couche de base (A).

11. Procédé selon la revendication 10, caractérisé en ce que, pour la variation de l'épaisseur de la (des) couche(s) de recouvrement (B, B'), on règle l'introduction des polymères constituant la(les) couche(s) de recouvrement (B, B') dans la buse de co-extrusion.

12. Procédé selon l'une des revendications 10 ou 11, caractérisé en ce que le réglage des courants de masse fondue des polymères constituant la(les) couche(s) de recouvrement (B, B') est effectué par le réglage de la vitesse de rotation des appareils prévus pour la plastification et le transport des polymères.

13. Procédé selon l'une des revendications 10 à 12, caractérisé en ce que le thermofixage est effectué à une température de plus de 200°C, de préférence de plus de 210°C, et en ce que, après le thermofixage, la pellicule est brusquement refroidie jusqu'à une température de 50°C au maximum.

**Claims**

1. A multilayer, biaxially oriented carrier film for magnetic information media, which is produced by coextrusion and is comprised of a substrate layer (A) comprising a thermoplastic polymer matrix made of essentially linear aromatic polyester containing finely distributed solid particles to improve its surface roughness which determines the slip properties of the film, characterized in that said solid particles are contained in said substrate layer (A) in an amount of 0.001% by weight to 10% by weight, relative to the weight of the polymer forming said substrate layer (A), the average particle size of said solid particles being in the range of 0.001 µm to 20 µm; that a cover layer (B), applied to at least one of the two surfaces of said substrate layer (A), has a thermoplastic polymer matrix comprising essentially linear, aromatic copolyester, which incorporates finely distributed solid particles in an amount of 0% by weight to 10% by weight, relative to the weight of the polymer forming said cover layer (B), said solid particles having an average particle size of less than 0.3 µm; and that the thickness of said cover layer (B) is not more than 40% of the thickness of said substrate layer (A).

2. The carrier film as claimed in claim 1, wherein the thickness of said cover layer (B) is not more than 30%, and preferably is not more than 15%, of the thickness of said substrate layer (A).

3. The carrier film as claimed in claim 1 or 2, wherein said substrate layer (A) is comprised of polyethylene terephthalate containing finely distributed solid particles in an amount of 0.001% by weight to 5% by weight, preferably of 0.001% by weight to 1% by weight, relative to the weight of the polyethylene terephthalate forming said substrate layer (A), it being possible for said particles to be inorganic and/or organic additives and/or precipitates of catalyst residues.

4. The carrier film as claimed in any of claims 1 to 3, wherein said particles contained in said substrate layer (A) have an average particle size of 0.01 µm to 15 µm, preferably of 0.1 µm to 10.0 µm.

5. The carrier film as claimed in any of claims 1 to 4, wherein said cover layer (B) is comprised of a copolyester of polyethylene terephthalate-isophthalate having a content of isophthalate units of at least 5% by weight, preferably of at least 15% by weight, and particularly preferably of 15 to 25% by weight, each time relative to the total weight of the copolyester, said copolyester containing finely distributed solid particles in an amount of 0 to 5% by weight, preferably of 0 to 2% by weight, and particularly preferably of 0% by weight, each time relative to the weight of the copolyester forming said cover layer (B).

6. The carrier film as claimed in any of claims 1 to 5, wherein said particles contained in said cover layer (B) have an average particle size of less than 0.2 µm, preferably of less than 0.1 µm, it being possible for said particles to be inorganic and/or organic additives and/or precipitates of catalyst residues.

7. The carrier film as claimed in any of claims 1 to 6, wherein cover layers (B, B') are applied to both surfaces of said substrate layer (A).

8. The carrier film as claimed in any of claims 1 to 7, wherein said cover layer (B'), which is present on the surface of said substrate film where the magnetic layer is to be applied, has a layer thickness of 0.5 µm to 3 µm, preferably of 0.5 µm to 2 µm.

9. The carrier film as claimed in any of claims 1 to 8, wherein said cover layer (B), which is present on the surface of said substrate layer (A) lying opposite the surface where the magnetic layer is to be applied, has a layer thickness of 0.1 µm to 2 µm, preferably of 0.1 µm to 1 µm.

10. A process for manufacturing, by coextrusion, a carrier film as claimed in any of claims 1 to 9, which comprises plastifying the polymers forming the individual layers of said substrate film in separate extruders, conveying the melts through separate melt lines to an extrusion die where the multilayered prefilm is produced, extruding said multilayered prefilm onto a chill roller and chilling the extrudate in the unstretched state, thereafter orienting the unstretched film by multiple stretching in the longitudinal and transverse directions, heat-setting, slitting and winding the film, said process being characterized in that said solid particles are contained in said substrate layer (A) in an amount of 0.001% by weight to 10% by weight, relative to the weight of the polymer forming said substrate layer (A), the average particle size of said solid particles being in the range of 0.001 µm to 20 µm; that said cover layer (B), applied to at least one surface of said substrate layer (A), has a thermoplastic polymer matrix comprising essentially linear, aromatic polyester, which incorporates finely distributed solid particles in an amount of 0% by weight to 10% by weight, relative to the weight of the polymer forming said cover layer (B), said solid particles having an average particle size of less than 0.3 µm; and that the thickness of said cover layer (B) is not more than 40% of the thickness of said substrate layer (A).

11. The process as claimed in claim 10, wherein the thickness(es) of said cover layer(s) (B, B') is (are) varied by regulating the melt feed of the polymers forming said cover layer(s) (B, B') to the coextrusion die.

12. The process as claimed in any of claims 10 or 11, wherein the melt feed(s) of the polymers forming said cover layer(s) (B, B') are regulated by appropriately adjusting the rpm of the assemblies provided for plastifying and conveying said polymers.

13. The process as claimed in any of claims 10 to 12, wherein heat-setting is performed at a temperature of more than 200°C, preferably of more than 210°C, and wherein the film is chilled down to a temperature of not more than 50°C following heat-setting.